(19) Europäisches Patentamt
European Patent Office
Office européen des brevets

(11) **EP 1 989 538 B1**

(12) **EUROPEAN PATENT SPECIFICATION**

(45) Date of publication and mention of the grant of the patent:
**06.04.2016 Bulletin 2016/14**

(51) Int Cl.:
**G01N 27/406** *(2006.01)*     **F02D 41/14** *(2006.01)*
**G05D 23/19** *(2006.01)*

(21) Application number: **06728644.3**

(22) Date of filing: **28.02.2006**

(86) International application number:
**PCT/JP2006/304214**

(87) International publication number:
**WO 2007/099647 (07.09.2007 Gazette 2007/36)**

(54) **TEMPERATURE CONTROL APPARATUS FOR HEATER-EQUIPPED SENSOR**

TEMPERATURKONTROLLVORRICHTUNG FÜR MIT EINEM HEIZELEMENT AUSGESTATTETEN SENSOR

APPAREIL DE RÉGULATION DE TEMPÉRATURE POUR CAPTEUR MUNI D'UN ÉLÉMENT CHAUFFANT

(84) Designated Contracting States:
**DE FR GB IT**

(43) Date of publication of application:
**12.11.2008 Bulletin 2008/46**

(73) Proprietor: **TOYOTA JIDOSHA KABUSHIKI KAISHA**
**Toyota-shi, Aichi-ken, 471-8571 (JP)**

(72) Inventor: **SUZUKI, Yusuke**
**Toyota-shi, Aichi 471-8571 (JP)**

(74) Representative: **TBK**
**Bavariaring 4-6**
**80336 München (DE)**

(56) References cited:
**EP-A2- 0 995 986     JP-A- 2003 185 626**
**US-A- 4 524 264     US-A- 4 611 562**
**US-A- 4 694 809**

## Description

### Technical Field

The present invention relates to a temperature control technique for a sensor which is equipped with a heater to warm up its sensor chip. More particularly, the invention relates to a temperature control technique to prevent the chip temperature from rising sharply when the sensor chip is warmed up.

### Background Art

Gas sensors are known which detect specific gas components. A gas sensor is provided with a sensor chip. The sensor chip comprises a solid electrolyte and a pair of electrodes which are formed respectively on the top and bottom sides thereof. The gas sensor can detect a specific gas component while the temperature of the sensor chip is higher than its activation temperature. A heater is therefore attached to a gas sensor so that the sensor chip is warmed up by the heater when the gas sensor is booted.

Conventionally, when a sensor chip is warmed up, the power to be supplied to the heater is controlled by such a method as described in Japanese Patent Laid-open No. 2003-185626. In this conventional control method, a constant power is supplied by open loop control until the sensor chip temperature approaches to a target temperature. Then, the power supply to the heater is adjusted by feedback control based on the difference between the target temperature and the actual temperature so as to keep the sensor chip at the target temperature.

A similar prior art control method can be found in EP 0 995 986 A2.

Known as gas sensors put to practical use are exhaust gas sensors (oxygen sensors, air-fuel ratio sensors, etc.) disposed in exhaust pipes of internal combustion engines to detect oxygen concentrations in the exhaust gases. In the internal combustion engine, the amount of fuel to be injected is adjusted by air-fuel ratio feedback control based on the output from an exhaust gas sensor.

Exhaust gas from a gasoline engine has a high temperature. In such an internal combustion engine, since the catalyst temperature rises quickly after the engine is started, the air-fuel ratio feedback control based on the output of the exhaust gas sensor is soon started. Therefore, the exhaust gas sensor must be activated promptly by supplying the maximum power to the heater by the open loop control after the sensor is turned on. Thus, after the open loop control is switched to the feedback control, the power supply to the heater is likely to fall, that is, the possibility of the sensor temperature rising sharply is low.

Exhaust gas from a diesel engine does not have a high temperature. In such an internal combustion engine, since the catalyst temperature rises slowly after the engine is started, the air-fuel ratio feedback control is not soon started. Therefore, early activation of the exhaust gas sensor may not be so needed as in high exhaust temperature internal combustion engines. Further, since the exhaust temperature is low, the sensor chip is likely to have a sharp thermal gradient therein while it is heated. Such a sharp thermal gradient may cause a high internal stress. It is therefore desired to make the chip temperature's rising speed as slow as possible. In an internal combustion engine where the exhaust temperature is low, the power to be supplied to the heater by the open loop control should therefore be as low as possible although the temperature of the exhaust gas sensor must be raised sufficiently before the fuel-air ratio feed back control is started.

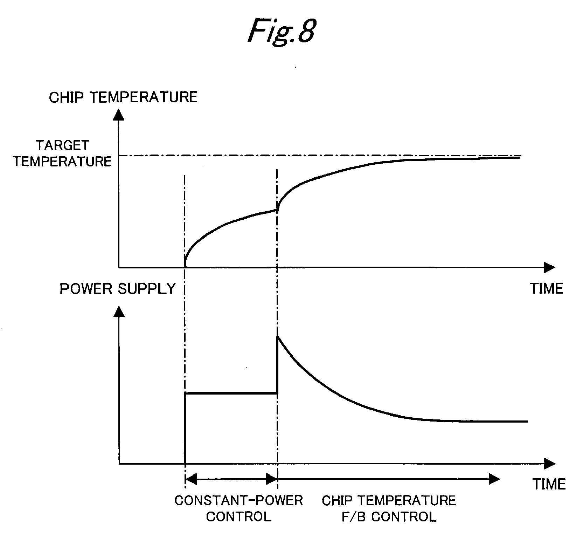

If the power to be supplied to the heater by the open loop control is set low, as shown in Fig.8, it is possible that the power supply will increase sharply due to the large difference between the target temperature and the actual temperature upon switching from the open loop control to the feedback control. If the power supply to the heater increases sharply when the temperature of the sensor chip is high, the internal stress of the sensor chip changes abruptly, raising the possibility of the sensor chip being damaged.

### Disolosure of Invention

The present invention has been made to solve the above-mentioned problem. It is an object of the present invention to provide a temperature control apparatus for a heater-equipped sensor which can prevent the chip temperature from rising sharply when the method of controlling the power supply to the heater is switched from open loop control to feedback control.

The above object is achieved by a temperature control apparatus for a heater-equipped sensor according to claim 1. The control apparatus includes a power supply control unit for selecting open loop control as the power supply control method when power begins to be supplied to the heater and, after that, switching the control method to feedback control, wherein under the open loop control, a predetermined power is supplied to the heater while under the feedback control, the power to be supplied to the heater is set based on the difference between the target temperature and the actual temperature of the sensor chip. For a short while after the open loop control is switched to the feedback control, the power supply control unit uses a predetermined dampening factor to dampen the target power supply calculated by the feedback control and sets the result as the power to be supplied to the heater.

According to the seventh aspect of the present invention, for a predetermined period of time after the open loop control is switched to the feedback control, the power to be supplied to the heater is set to a value obtained by dampening the target power calculated by the feedback control. Therefore, even if the immediate post-switching difference between the target temperature and actual temperature of the sensor chip is large, it is possible to prevent the power supply from increasing sharply and consequently prevent the sensor chip from being damaged due to a sharp rise of the chip temperature.

**Brief Description of Drawings**

Fig. 1 illustrates the structure of an oxygen sensor according to a first embodiment of the present invention;
Fig. 2 is a flowchart illustrating a routine that is executed by a first embodiment of the present invention;
Fig. 3 shows how the power supply to the heater and the chip temperature change with time when the power supply is controlled according to the routine shown in Fig.2;
Fig. 4 is a flowchart illustrating a routine that is executed by a second embodiment of the present invention;
Fig. 5 is a flowchart illustrating a modified routine that is executed by a second embodiment of the present invention;
Fig. 6 is a flowchart illustrating a routine that is executed by a third embodiment of the present invention;
Fig. 7 shows how the power supply to the heater and the chip temperature change with time when the power supply is controlled according to the routine shown in Fig.6;
Fig. 8 shows how the power supply to the heater and the chip temperature change with time when the power supply is controlled according to the conventional control method;

**Best Mode for Carrying Out the Invention**

First Example

The following will describe a first example of the present invention with reference to the drawings.

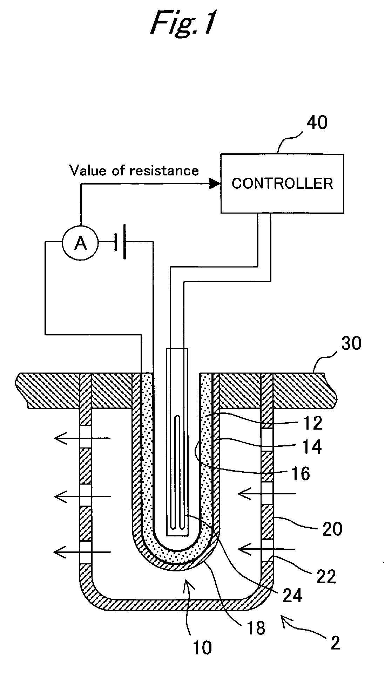

In the present example , the present invention is applied to a temperature controller for an oxygen sensor disposed in an exhaust pipe of an internal combustion engine. Fig. 1 is a cross sectional view provided to explain the configuration of an oxygen sensor to which the present invention is applied. As shown in Fig. 1, an oxygen sensor 2 is disposed in the exhaust pipe 30 of the internal combustion engine so as to protrude inward there. The oxygen sensor 2 is composed mainly of a sensor chip 10, a cover 20 and a heater 24.

The sensor chip 10 is constructed by fixing an exhaust side electrode layer 14 to the outer surface of a solid electrolyte 12 shaped like a test tube and an atmospheric side electrode layer 16 to the inner surface and further setting a porous coating layer 18 to the surface of the exhaust side electrode layer 14. The cover 20 is attached to the inner wall of the exhaust pipe 30 so as to cover the sensor chip 10. For communication between the inside and outside of the cover 20, the side wall of the cover 20 has many small holes formed through it. Through these small holes, exhaust gas which flows in the exhaust pipe 30 advances to the inside of the cover 20 and again to the outside of the cover 20. The heater 24 is accommodated in the sensor chip 10 so as to be surrounded by the atmosphere side electrode layer 16.

With the above-mentioned configuration, power is supplied to the heater 24 to radiate heat from it. Thus, it is possible to raise the temperature of the solid electrolyte 12 by heating the sensor chip 10 from the inside. The power supply to the heater 24 is controlled by a controller 40. In addition, since the temperature and resistance of the solid electrolyte 12 are mutually related, it is also possible to indirectly determine the temperature of the sensor chip 10 by measuring the resistance between the electrode layers 14 and 16. The value of resistance measured between the electrode layers 14 and 16 is entered into the controller 40.

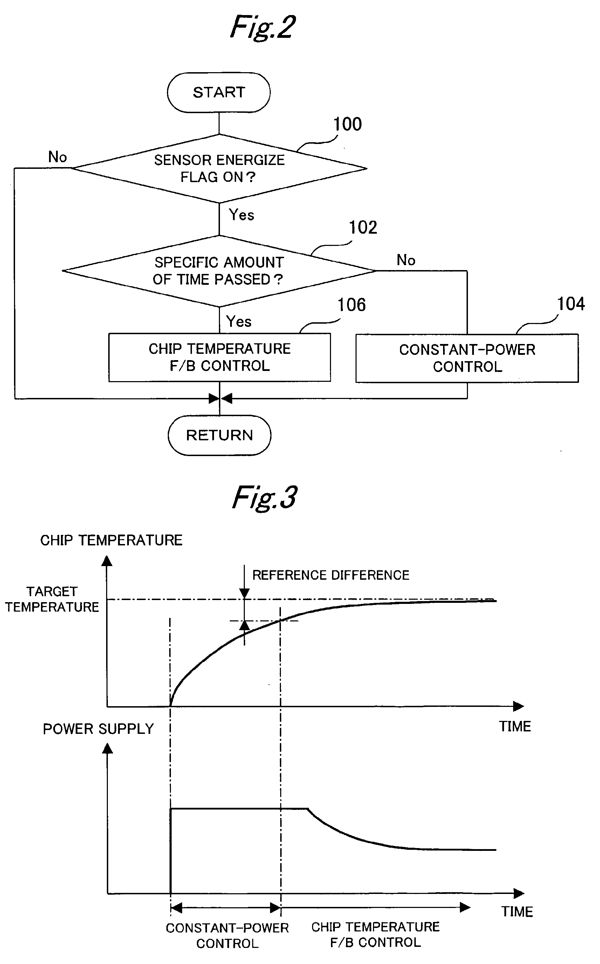

In the present example , the power supply to the heater 24 is controlled according to a routine shown by a flowchart of Fig. 2. At the first step 100 of this routine, it is judged whether a sensor energize flag is on. The sensor energize flag is turned on/off in conjunction with, for example, the ignition switch of the internal combustion engine. If the sensor energize flag is off, this routine is not started. In addition, this routine is terminated if the sensor energize flag is turned off during execution of this routine.

If the sensor energize flag is on, it is judged at the next step 102 whether a specific amount of time has passed since the sensor energize flag was turned on. A timer continues measuring the amount of time which has passed since the sensor energize flag was changed from off to on. According to the judgment result, constant-power control (open loop control) may be performed to supply a constant power to the heater 24 (step 104) until that specific amount of time passes. If that specific amount time has passed since the sensor energize flag was turned on, the control method is switched to chip temperature F/B control (feedback control) to set the power to be supplied to the heater 24 based on the difference between the target temperature and actual temperature of the sensor chip 10 (step 106). The target temperature of the sensor chip 10 is set to a temperature higher than its activation temperature. As mentioned earlier, the actual temperature of the sensor chip 10 can be determined indirectly from the result of measuring the resistance between the electrode layers 14 and 16. As the chip temperature F/B control method, PID control is used.

The power to be supplied immediately after the power supply control method is switched from the constant-power control to the chip temperature F/B control depends on the difference between the target temperature and actual temperature of the sensor chip 10 just after the switching. If this difference is too large, the power supply may increase sharply upon the switching, resulting in a sharp temperature rise of the sensor chip 10. To prevent such a sharp rise of the chip temperature, it is preferable to reduce the immediate post-switching difference between the target temperature and the actual temperature so as to make the power to be supplied just after the switching equal to or lower than the power supplied during the constant-power control. The smallest difference between the target temperature and the actual temperature which meets this requirement is determined through experiment, etc. and set as the reference difference. The above-mentioned specific amount of time is set as a period of time in which the difference between the target temperature and the actual temperature is expected to fall within the reference difference while the constant-power control is performed.

Fig. 3 shows how the power supply to the heater 24 and the chip temperature change with time when the power supply is controlled according to the above-mentioned routine. According to the routine, as shown in this figure, the switching of the power supply control method is done from the constant-power control to the chip temperature F/B control after the passage of a time period in which the difference between the target temperature and the actual temperature is expected to fall within the reference difference. It is therefore possible to prevent the power supply from rising sharply just after the switching and consequently prevent the sensor chip 10 from being damaged due to a sharp temperature rise.

In the present embodiment, "power supply control means" in the first aspect of the present invention is realized through execution of the above-mentioned routine by the controller 40 and, in particular, "switching judgment means" in the first aspect of the present invention is realized through execution of the above-mentioned step 102.

Second Example

The following describes a second example of the present invention.

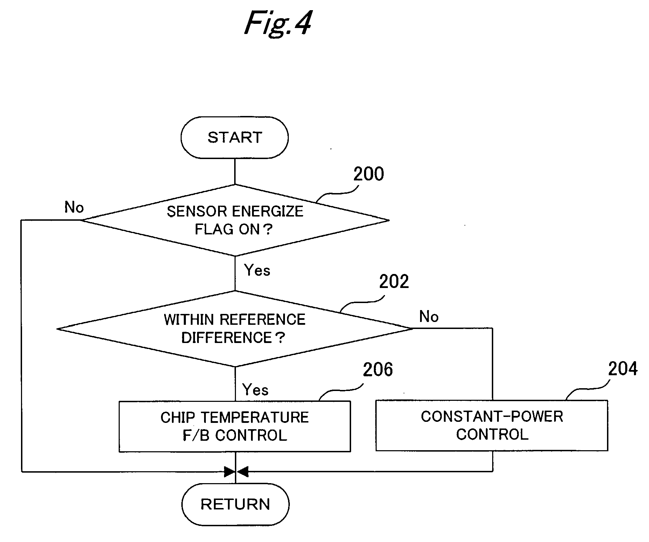

The temperature controller of the present embodiment can be realized by the controller 40 through execution of a routine shown in Fig. 4 instead of the routine shown in Fig. 2.

In the present example , the power supply to the heater 24 is controlled according to the routine shown as a flowchart in Fig. 4. At the first step 200 of this routine, it is judged whether the sensor energize flag is on. If the sensor energize flag is on, the next step 202 indirectly determines the actual temperature of the sensor chip 10 from the result of measuring the resistance between the electrode layers 14 and 16 and judges whether the difference between the target temperature and the actual temperature is within a specific reference difference. According to the judgment result, constant-power control may be performed to supply a constant power to the heater 24 (step 204) until the difference between the target temperature and the actual temperature falls within the reference difference. If the difference between the target temperature and the actual temperature falls within the reference difference, the control method is switched to chip temperature F/B control to set the power to be supplied to the heater 24 based on the difference between the target temperature and actual temperature of the sensor chip 10 (step 206).

The above-mentioned reference difference is set so as to make the immediate post-switching power supply equal to or lower than the power supplied during the constant-power control before switched to the chip temperature F/B control. In the present embodiment, the reference difference is determined by calculation as described below.

If PID control is used as the chip temperature F/B control method, the power supply is given by the following expression (1) where Gp is the proportional gain, Gi is the integral gain, Gd is the derivative gain and Chip Temperature Deviation is the difference between the target temperature and actual temperature of the sensor chip 10:

$$\text{Power Supply = Gp x Chip Temperature Deviation +}$$

$$\text{Gi x Chip Temperature Deviation Integral Value + Gd x}$$

$$\text{Chip Temperature Differential} \cdots (1)$$

The power supply just after switching is done to the chip temperature F/B control is given by the following expression (2) since the chip temperature deviation integral value and the chip temperature differential are zero at that time:

$$\text{Power Supply} = \text{Gp} \times \text{Chip Temperature Deviation} \quad \cdots (2)$$

Therefore, if the requirement given by the following expression (3) is met, it is possible to prevent the power supply from rising upon switching to the chip temperature F/B control.

$$\text{Power Supply during Constant-Power Control} \geqq$$
$$\text{Power Supply at Start of Chip Temperature F/B Control} =$$
$$\text{Gp} \times \text{Chip Temperature Deviation} \quad \cdots (3)$$

In the above expression, the power supply during the constant-power control and the proportional gain Gp are predetermined. Therefore, switching to the chip temperature F/B control should not be allowed unless the requirement given by the following expression (4) is met:

$$\text{Chip Temperature Deviation} \leqq \text{Power Supply during Constant-Power Control} / \text{Gp} \quad \cdots (4)$$

In the present embodiment, the above-mentioned reference difference is set as a chip temperature deviation which meets the above expression (4).

According to the above-mentioned routine, since the control method is switched from the constant-power control to the chip temperature F/B control after the difference between the target temperature and actual temperature of the sensor chip 10 falls within the reference difference, it is possible to prevent the power supply from rising sharply upon switching and consequently prevent the sensor chip 10 from being damaged due to a sharp temperature rise. As with the first embodiment, if the power supply to the heater 24 is controlled according to the above-mentioned routine, the power supply and the chip temperature change with time as shown in Fig. 3.

In the present example , "power supply control means" in the third aspect of the present invention is realized through execution of the above-mentioned routine by the controller 40 and, in particular, "switching judgment means" in the third aspect of the present invention is realized through execution of the above-mentioned step 202.

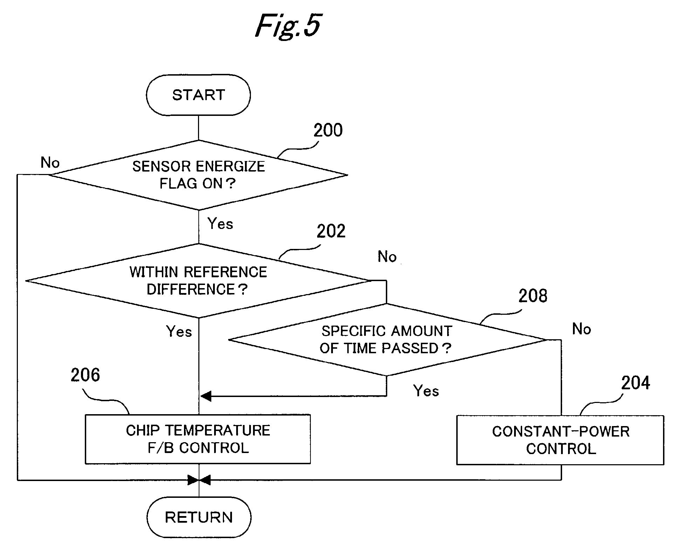

According to the above-mentioned routine, if the temperature of the sensor chip 10 does not rise sufficiently during the constant-power control due to a battery trouble or the like, switching may never be executed from the constant-power control to the chip temperature F/B control. To ensure the switching from the constant-power control to the chip temperature F/B control, it is preferable to execute not only the switching judgment (step 202) done in the above-mentioned routine but also the switching judgment (step 101) done in the first embodiment. That is, it is preferable to control the power supply to the heater 24 according to a routine shown as a flowchart in Fig. 5. Of the steps executed in the routine shown in Fig. 5, each step identical to the corresponding one in the routine shown in Fig. 4 is given the same step number as in Fig. 4.

In the routine shown in Fig. 5, if it is judged at step 202 that the difference between the target temperature and actual temperature of the sensor chip 10 is larger than the reference difference, judgment is done at step 208. It is judged at step 208 whether a specific period of time has passed since the sensor energize flag was turned on. This specific period of time is set slightly longer than the period of time in which the difference between the target temperature and the actual temperature is expected to fall within the reference difference. If it is judged at step 208 that that specific period time has not passed, the constant-power control is performed to supply a constant power to the heater 24 (step 204). Regardless of the judgment result of the step 202, the control method is switched from the constant-power control to the chip temperature F/B control if that specific period time has passed (step 206).

According to the above-mentioned routine, since the control method is switched from the constant-power control to the chip temperature F/B control upon passage of a predetermined period of time after the sensor energize flag is turned on, the sensor chip 10 can surely reach the target temperature.

**Embodiment**

The following describes an embodiment of the present invention.

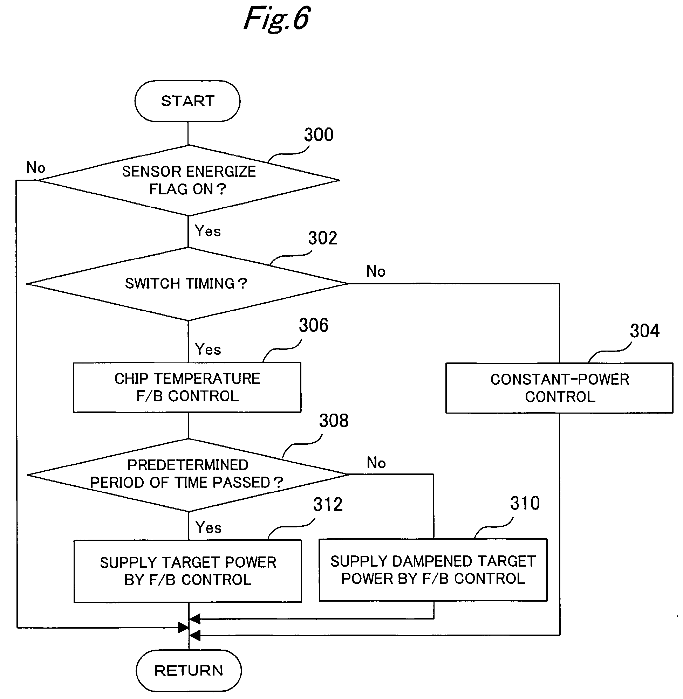

The present temperature controller embodiment can be realized by the controller 40 through execution of a routine shown in Fig. 6 instead of the routine shown in Fig. 2.

In the present embodiment, the power supply to the heater 24 is controlled according to the routine shown in Fig. 6. The routines according to the first and the second embodiment are characterized by how the switching from the constant-power control to chip temperature F/B is determined. However, the routine of this embodiment is characterized by processing after switching is done to the chip temperature F/B control.

According to the routine, it is judged at the first step 300 whether the sensor energize flag is on. If the sensor energize flag is on, it is judged at the subsequent step 302 whether the timing of switching the constant-power control to the chip temperature F/B control has come. How to determine this switch timing is not limited to a specific method. For example, the switch timing may depend on the duration after the sensor energize flag is turned on. Likewise, the temperature of the sensor chip 10 may be used to determine the switch timing. According to the judgment result, the constant-power control may be selected as the method of controlling the power supply to the heater 24. In this case, the constant-power control is performed to supply a constant power to the heater 24 until the switch timing comes (step 304).

If it is judged at step 302 that the switch timing has come, the control method is switched from the constant-power control to the chip temperature F/B control (step 306). After the switching is done, it is judged at the subsequent step 308 whether a predetermined period of time has passed since the beginning of the chip temperature F/B control. Until that predetermined period of time passes, the target power calculated by the chip temperature F/B control is not directly supplied. Rather, dampening is performed on the power supply according to the following equation (5):

$$Wi = Wi\text{-}1 + (TWi - Wi\text{-}1) / A \cdots (5)$$

In the equation (5), Wi is the power to be supplied and Wi-1 is the last supplied power. TWi is the target power calculated by the ordinary chip temperature F/B control and A is the dampening factor. Until the condition is judged true at step 308, the power Wi calculated according to the above equation is supplied to the heater 24.

If it is judged at step 308 that the predetermined period of time has passed since the chip temperature F/B control was started, the dampening is terminated. After that, the target power calculated by the ordinary chip temperature F/B control is supplied to the heater 24 (step 312). The predetermined period of time used in the judgment of step 308 should be so long that the power supply does not sharply rise upon termination of the dampening. In addition, it is also possible to determine whether to terminate the dampening according to the temperature of the chip sensor 10 instead of the duration.

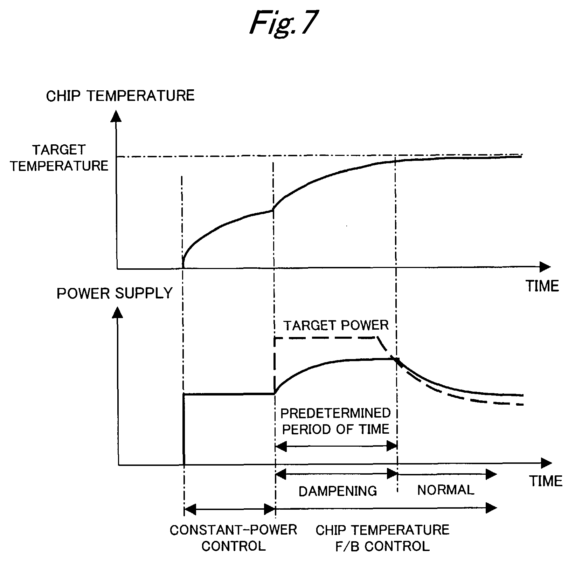

Fig. 7 shows how the power supply to the heater 24 and the chip temperature change with time when the power supply is controlled according to the above-mentioned routine. According to the above-mentioned routine, for a short while after the constant-power control is switched to the chip temperature F/B control, the power to be supplied to the heater 24 is set to a value obtained by dampening the target power calculated by the chip temperature F/B. Therefore, even if the immediate post-switching difference between the target temperature and actual temperature of the sensor chip 10 is large, the power supply does not sharply rise. This can prevent the sensor chip 10 from raising its temperature so sharply as to suffer damage.

In addition, according to the above-mentioned routine, fluctuations of the supplied power are suppressed by the dampening during the chip temperature F/B control. To know the temperature of the sensor chip 10, the resistance between the electrodes 14 and 16 is measured. Even if noise is superimposed on the measured value due to disturbance or the like, it is possible to prevent the power supply from changing sharply due to the noise.

In the present embodiment, "power supply control means" in the seventh aspect of the present invention is realized by the controller 40 through execution of the above-mentioned routine.

Others

Although each of the above-mentioned embodiments applies the present invention to an oxygen sensor disposed in a passage of exhaust in an internal combustion engine, the present invention can be applied to any of air-fuel ratio sensors, NOx sensors, HC sensors and the like if the sensor is composed of a sensor chip which is activated by warm-up and a heater which receives electricity to generate heat.

## Claims

**1.** A temperature control apparatus for a heater-equipped sensor (2) comprising a sensor chip (10) which is activated by warm-up and a heater (24) which is supplied with electric power to generate heat, wherein said control apparatus warms up the sensor chip (10) to a predetermined target temperature equal to or higher than its activation temperature by making the heater (24) heat the sensor chip (10), said control apparatus comprising:

power supply control means for selecting open loop control as the power supply control method when power begins to be supplied to the heater (24) and, after that, switching the control method to feedback control, wherein under the open loop control, a predetermined power is supplied to the heater (24) while under the feedback control, the power to be supplied to the heater (24) is set based on the difference between the target temperature and the actual temperature of the sensor chip (10);

**characterized in that** for a predetermined period of time after the open loop control is switched to the feedback control, the power supply control means is configured to use a predetermined dampening factor to dampen the target power supply calculated by the feedback control and to set the result as the power to be supplied to the heater (24).

## Patentansprüche

1. Temperatursteuervorrichtung für einen heizelementbestückten Sensor (2) mit einem Sensorchip (10), der durch Aufwärmen aktiviert wird, und mit einem Heizelement (24), dem elektrische Energie zugeführt wird, um Wärme zu erzeugen, wobei die Steuervorrichtung den Sensorchip (10) auf eine vorbestimmte Solltemperatur gleich oder größer als dessen Aktivierungstemperatur aufwärmt, indem diese das Heizelement (24) dazu bringt, den Sensorchip (10) zu heizen, wobei die Steuervorrichtung aufweist:

eine Energiezufuhrsteuereinrichtung zur Auswahl einer offenkreisigen Steuerung als das Energiezufuhrsteuerverfahren zu Beginn einer Zufuhr von Energie zu dem Heizelement (24), und zu einem danach folgenden Schalten des Steuerverfahrens zu einer rückgekoppelten Regelung, wobei unter der offenkreisigen Steuerung eine vorbestimmte Energie zu dem Heizelement (24) zugeführt wird, wobei unter der rückgekoppelten Regelung die zu dem Heizelement (24) zuzuführende Energie basierend auf der Differenz zwischen der Solltemperatur und der tatsächlichen Temperatur des Sensorchips (10) eingestellt wird,

**dadurch gekennzeichnet, dass**
für einen vorbestimmten Zeitabschnitt nach einem Schalten der offenkreisigen Steuerung zu der rückgekoppelten Regelung die Energiezufuhrsteuerung dazu eingerichtet ist, um einen vorbestimmten Dämpfungsfaktor zu verwenden, um die durch die rückgekoppelte Regelung berechnete Sollenergiezufuhr zu dämpfen und um das Ergebnis als die zu dem Heizelement (24) zuzuführende Energie einzustellen.

## Revendications

1. Appareil de régulation de température pour un capteur muni d'un élément chauffant (2) comprenant une puce de capteur (10) qui est activée par réchauffement et un élément chauffant (24) qui est alimenté en énergie électrique pour générer de la chaleur, dans lequel ledit appareil de régulation réchauffe la puce de capteur (10) à une température cible prédéterminée égale ou supérieure à sa température d'activation en faisant faire chauffer la puce de capteur (10) par l'élément chauffant (24), ledit appareil de régulation comprenant :

des moyens de régulation d'alimentation en énergie pour sélectionner une régulation en boucle ouverte comme procédé de régulation d'alimentation en énergie quand une énergie commence à être alimentée à l'élément chauffant (24) et, ensuite, basculer le procédé de régulation vers une régulation à rétroaction, dans lesquels sous régulation en boucle ouverte, une énergie prédéterminée est alimentée à l'élément chauffant (24) tandis que sous régulation à rétroaction, l'énergie qui doit alimenter l'élément chauffant (24) est définie sur la base d'une différence entre la température cible et la température réelle de la puce de capteur (10) ;

**caractérisé en ce que** pour une période de temps prédéterminée après que la régulation en boucle ouverte est basculée vers la régulation à rétroaction, les moyens de régulation d'alimentation en énergie sont configurés pour utiliser un facteur d'amortissement prédéterminé pour amortir l'alimentation en énergie cible calculée par la régulation à rétroaction et pour définir le résultat comme énergie à être alimentée à l'élément chauffant (24).

# Fig.1

Value of resistance

CONTROLLER

40

A

30

12
14
16
20
22
24
18
10
2

## *Fig.2*

```
                    ┌─────────┐
                    │  START  │
                    └─────────┘
                         │
                                            100
            No          ╱╲
        ┌──────────────╱  ╲
        │            ╱ SENSOR ╲
        │           ╱ ENERGIZE ╲
        │           ╲  FLAG ON?╱
        │            ╲        ╱
        │             ╲      ╱
        │               ╲  ╱
        │                ╲╱
        │                 │ Yes
        │                               102
        │               ╱╲
        │             ╱    ╲              No
        │           ╱ SPECIFIC ╲ ────────────────┐
        │          ╱  AMOUNT OF  ╲                │
        │          ╲ TIME PASSED?╱                │
        │           ╲           ╱                 │
        │             ╲       ╱                   │
        │               ╲   ╱                     │
        │                ╲ ╱   106                 │            104
        │                 │ Yes                    │
        │      ┌──────────────────────┐   ┌──────────────────────┐
        │      │  CHIP TEMPERATURE    │   │   CONSTANT-POWER      │
        │      │    F/B CONTROL       │   │      CONTROL          │
        │      └──────────────────────┘   └──────────────────────┘
        │                 │                        │
        └─────────────────┤◄───────────────────────┘
                          │
                    ┌─────────┐
                    │ RETURN  │
                    └─────────┘
```

## *Fig.3*

CHIP TEMPERATURE

TARGET TEMPERATURE

REFERENCE DIFFERENCE

TIME

POWER SUPPLY

TIME

CONSTANT-POWER CONTROL          CHIP TEMPERATURE F/B CONTROL

# Fig.4

```
                    ( START )
                        |
         No             |              200
    +-------<  SENSOR ENERGIZE  >
    |          FLAG ON ?
    |               |
    |              Yes
    |               |                  202
    |         <  WITHIN REFERENCE  >-------- No
    |            DIFFERENCE ?               |
    |               |                       |
    |              Yes          206         |       204
    |      +------------------+     +------------------+
    |      | CHIP TEMPERATURE |     | CONSTANT-POWER   |
    |      |   F/B CONTROL     |     |    CONTROL       |
    |      +------------------+     +------------------+
    |               |                       |
    +---------------+-----------------------+
                    |
               ( RETURN )
```

10

## Fig.5

```
              START

                 │
                 ▼                          200
         ┌───────────────────┐
   No    │  SENSOR ENERGIZE  │
 ◄───────│     FLAG ON ?     │
         └───────────────────┘
                 │
                Yes             202
                 ▼                              No
         ┌───────────────────┐
         │ WITHIN REFERENCE  │ ──────────────────────┐
         │   DIFFERENCE ?    │                        │
         └───────────────────┘               208      │
                 │                                     ▼
                Yes                     ┌────────────────────┐     No
                 │                      │  SPECIFIC AMOUNT   │ ────────┐
                 │                      │  OF TIME PASSED ?  │          │
        206      │                      └────────────────────┘          │
                 │                              Yes         204          │
   ┌──────────────────────┐      ◄──────────────┘   ┌──────────────────────┐
   │  CHIP TEMPERATURE    │                          │  CONSTANT-POWER      │
   │    F/B CONTROL       │                          │     CONTROL          │
   └──────────────────────┘                          └──────────────────────┘
                 │                                              │
                 ▼                                              │
              RETURN ◄───────────────────────────────────────────┘
```

# Fig.6

START

↓

300 SENSOR ENERGIZE FLAG ON? — No

Yes

302 SWITCH TIMING? — No → 304 CONSTANT-POWER CONTROL

Yes

306 CHIP TEMPERATURE F/B CONTROL

308 PREDETERMINED PERIOD OF TIME PASSED? — No → 310 SUPPLY DAMPENED TARGET POWER BY F/B CONTROL

Yes

312 SUPPLY TARGET POWER BY F/B CONTROL

RETURN

## Fig.7

CHIP TEMPERATURE

TARGET
TEMPERATURE

TIME

POWER SUPPLY

TARGET POWER

PREDETERMINED
PERIOD OF TIME

DAMPENING    NORMAL    TIME

CONSTANT-POWER    CHIP TEMPERATURE
CONTROL    F/B CONTROL

# *Fig.8*

CHIP TEMPERATURE

TARGET TEMPERATURE

TIME

POWER SUPPLY

TIME

CONSTANT-POWER CONTROL    CHIP TEMPERATURE F/B CONTROL

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003185626 A
- EP 0995986 A2